# EUROPEAN PATENT SPECIFICATION

(11) **EP 3 000 326 B1**
(45) Date of publication and mention of the grant of the patent: **24.04.2019**
(21) Application number: 15192561.7
(22) Date of filing: 25.11.2009
(51) Int. Cl.: A23B 4/07

(54) **METHOD FOR DEFROSTING OF RAW FROZEN MEAT-PRODUCTS**
VERFAHREN ZUM ABTAUEN VON ROHEN GEFRORENEN FLEISCHPRODUKTEN
PROCÉDÉ DE DÉCONGÉLATION DE PRODUITS À BASE DE VIANDE CONGELÉE CRUE

(43) Date of publication of application: 30.03.2016
(62) Divisional of application: 09014688.7
(73) Proprietor: GEA Food Solutions Bakel B.V., 5761 EN Bakel (NL)
(72) Inventor: Lyngoe, Bjarne, 9400 Norresundby (DK)
(74) Representative: Kutzenberger Wolff & Partner

(56) References cited:
- DE-A1- 1 810 745
- FR-A1- 2 692 112
- FR-A1- 2 711 485
- JP-A- 2004 357 629
- SU-A1- 1 655 429
- SU-A1- 1 706 510
- S. J. James and C. James: "Meat Refrigeration", 19 April 2002 (2002-04-19), Elsevier Science & Technology pages 161-189, * paragraph [8.3.1.3] *

## Description

The present invention relates to a method for defrosting of raw frozen meat- products in a tumbler, which comprises a drum, whereas the frozen meat is added to the drum. Such a process is for example known from EP 1 367 912, which has however, the disadvantage that it is very time consuming and that brine has to added to the meat.

FR269212 discloses a method wherein meat is defrosted inside a drum by addition of steam inside the drum and/or by creating vacuum inside the drum.

It is therefore the objective of the present invention, to provide a defrosting process that is hygienic and has a short duration.

The problem is solved with a method for defrosting of raw frozen meat-products in a tumbler, which comprises a drum, whereas the frozen meat is added to the drum, vacuum is maintained in the drum lower than 300 mbar while steam is injected and the meat is heated and cooled via the surface of the drum and/or the surface of carriers.

The present invention relates to a defrosting process to frozen meat. When processing frozen meat into cured products, the first step is defrosting, thawing of the meat, which is typically deep-frozen, i.e. has a temperature below -16°C.

Meat according to the present invention can be any meat like pork - for example silversides, topsides, bellies or loins-, like beef - for example knuckles, topsides, ground meat, various cuts-, like poultry - for example breast filets, whole chicken, wings, drum sticks. The meat can be also from any other animal or a mixture of meat from various animals. The meat can be ground, divided into pieces and/or can be defrosted in whole parts, like for example, chicken-breasts.

This meat is defrosted in a tumbler, which comprises a drum, which can be preferably hermetically closed. The frozen meat is filled, preferably batch-wise into the drum. Afterwards the thawing starts.

For the thawing process, a vacuum is established in the drum and then maintained during the entire thawing process, at least as long as steam is added to the drum.

The level of vacuum is maintained lower than 300 mbar, preferably lower than 200 mbar and more preferably lower than 100 mbar, most preferably, 50 -75 mbar. The level of vacuum is preferably controlled by a PLC.

During and/or after the establishment of the vacuum, steam is added to the drum. Preferably, the steam added has a temperature of 30- 50° C, preferably 33 - 40 °C and is preferably supplied at a pressure between 2 and 5 bar. In a preferred embodiment of the present invention 3 - 6 weight-%, relative to the weight of meat to be defrosted, is added to drum. Preferably, the energy-addition to the meat is 2500 - 3000 KJ/Kg, more preferably, 2500 - 2600 KJ/kg.

The steam can be added continuously or intermittently. Preferably, the addition of the steam is controlled based upon the level of vacuum in the drum. As soon as the pressure in the drum drops under a certain level, i.e. is too high, the addition of steam is reduced, if needed until zero. The addition of steam is restarted or increased, as soon as the vacuum-pump has reestablished a certain vacuum-level, preferably ≤ 50 mbar.

Defrosting with steam in the presence of vacuum has the advantage of transfer of more energy to the meat in comparison to water or brine. The steam condensates at low temperature and pressure, so that the product is only heated to a minimum. Steam automatically searches for areas with lower pressure i.e. area colder than the steam. There, the phase change of the steam will take place, releasing the energy of the steam.

Preferably, the drum is rotated continuously or intermittently during defrosting. The rotation is advantageous to expose more meat surface to the steam and to ensure an even distribution, however, preferably with low speed. The rotation has also the advantage, that in case the frozen meat is provided in blocks comprising numerous smaller pieces, is broken apart during defrosting.

According to the present invention, the meat is heated and/or cooled via the surface of the drum and/or the surface of carriers which are arranged inside of the drum. The addition of heat additional to the steam can be beneficial to improved and/or accelerate the defrosting of the meat. The cooling is beneficial to avoid overheating of the meat and/or to cool the meat down, for example to +2 - 3 °C after it has been defrosted and/or further treated. After the defrosting, the surface temperature of the meat is often higher than the target temperature, for example around 8 - 12 °C. To reach a typical target temperature of +2 - +3 °C, the cooling mode is preferably automatically switched on to bring the temperature of the meat down to a homogenous target temperature. During this cooling, the loose water in the drum, i.e. the condensed steam, is picked up into the meat, more preferably around 3- 6 weight-% relative to the initial weight of the frozen meat.

In a preferred embodiment of the present invention, the drum is at least temporarily tilted during the thawing process. Preferably, the tilting-angle is around 0- 30°, more preferably 0 -20°.

In a preferred embodiment, the meat is shell-cooked. Shell-cooked according to the present invention means the outer region of the meat is heat to a temperature of preferably 60 - 70. Preferably, the thickness of the shell is between 1,5 - 4,5 mm, more preferably between 2,5 - 3,5 mm.

Preferably, meat is cooled at the end of the process.

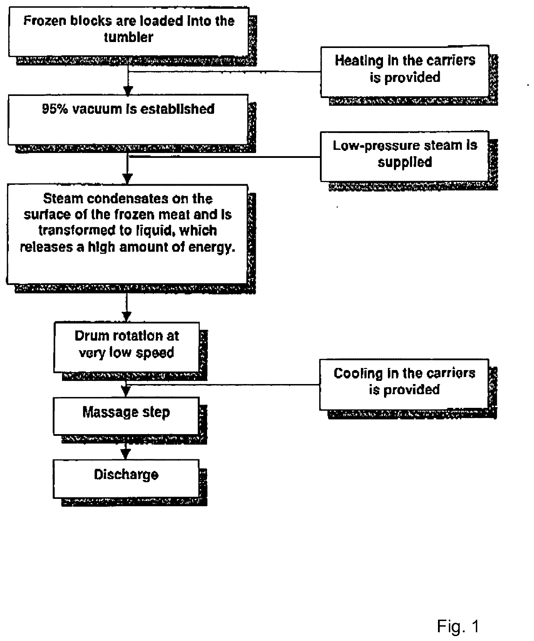

The invention is now explained according to the only figure 1 and some examples. These explanations and the examples do not limit the scope of protection.

### Figure 1

Figure 1 shows the inventive defrosting process. A block of frozen meat is loaded into the tumbler. If needed, heating is provided to the carrier and/or jacket of the drum of the tumbler. Simultaneous or afterwards 95 % vacuum is established and subsequently low pressure steam is added. The steam condenses on the surface of the frozen meat and is transformed to a liquid, which releases a high amount of energy and thus defrosts the meat.Steam is only added as long as a sufficient low vacuum is maintained, for example based on temperature control. During the defrosting the drum rotates at a very low speed. After the defrosting has taken place, the meat pieces have normally a temperature which is above the target temperature of the +2°C. Thus, while maintaining the rotation of the drum, the jacket and/or the carriers of the drum are cooled until the meat pieces have reached the target temperature around +2°C. During this massage step, condensed steam; i.e. water, is at least partially taken up by the meat, so that the meat pieces are, at the end of massage step, essentially dry. Subsequently, the meat is discharged.

### Examples

### 1. Typically defrosting process time for various products

The defrosting process was carried out in a carried out in a vacuum-based ScanMidi unit, a tumbler available from the applicant. The vacuum was established and maintained around 30- 75 mbar. The steam was supplied at a temperature of 33 - 40 °C and a pressure of 3,5 bar. The products were supplied to the drum at a temperature of - 20 °C. The speed of rotation was very low, in order to avoid damage of the product. Typical setting was 60 seconds on and 180 seconds off. The drum angle was between 5 and 15°. The temperature in the carriers and in the cooling jacket were set to +25 - +30 °C, to speed up the defrosting process. However, the temperature is set to -6°C at the end of the program, to cool down the product to the target temperature, i.e. from 12 °C to +2 °C in app. 60 min.

| Product: | Chicken breast fillets |
|---|---|
| Block Size: | 10 kg |
| Batch size: | 510 kg |
| Added Steam: | 4,8 % |
| End temperature: | +2,5°C |
| Process time: | 5 hours |

| Product: | Chicken drumsticks |
|---|---|
| Block Size: | 20 kg |
| Batch size: | 503 kg |
| Added Steam: | 4,5 % |
| End temperature: | +3,1°C |
| Process time: | 4 hours and 30 min. |

| Product: | Pork topsides |
|---|---|
| Block Size: | 25 kg |
| Batch size: | 535 kg |
| Added Steam: | 3,4 % |
| End temperature: | +2,5°C |
| Process time: | 6 hours and 15 min. |

| Product: | Various beef cuts |
|---|---|
| Block Size: | 18 kg |
| Batch size: | 806 kg |
| Added Steam: | 5,1 % |
| End temperature: | +2,2°C |
| Process time: | 9 hours and 45 min. |

### 2. Example for shell-cooking

2 batches of approx. 200 kg each were processed with an initial temperature of - 20°C. The ScanMidi was equipped with a temporarily exhaust for the continuous evaporation of the steam during the process into the drum. The inlet of the steam was set to 3.5 bars and a temperature of +139°C Celsius. The program was set to 5 minutes. The tumbler was set to 5° angle, to get steam distributed equal to the products during the process. Furthermore did we set the rotation direction for hard (counter clock) method, were the individual products has more surface for the steam distribution.

The speed of the tumbler was set to 2 rpm constant rotation. This was done to make sure that the steam would be distributed to all the products for the 5 minutes process. No cooling/heating of the glycol in the carries or extended jacket was used, as it would have no effect to this 5 minutes process.

The initial program was designed to investigate if shell cooking of the chicken fillets was possible. The test was set to run 5 minutes with constant rotation to get as even distribution of the steam as possible. The angle of the tumbler was 5°.

The result was promising and no visual damage of the fillets was shown. The filets were separated easily, when discharged onto a belt. The cooked shell was on an average basis 3 mm thick.

## Claims

1. Method for defrosting of raw frozen meat-products in a tumbler, which comprises a drum, whereas the frozen meat is added to the drum, **characterized in, that** vacuum is maintained in the drum lower than 300 mbar while steam is injected and that the meat is heated and cooled via the surface of the drum and/or the surface of carriers.

2. Method according to claim 1, **characterized in, that** the steam addition is at least reduced in case the vacuum drops under a predetermined level.

3. Method according to claim 2, **characterized in, that** the vacuum is maintained lower than 200 mbar and more preferably lower than 100 mbar.

4. Method according to one of the preceding claims, **characterized in, that** the drum is rotated continuously or intermittently, with preferably various rpms.

5. Method according to one of the preceding claims, **characterized in, that** the drum comprises means to heat and/or cool the surface of the drum.

6. Method according to one of the preceding claims, **characterized in, that** the drum is at least temporarily tilted during the thawing process.

7. Method according to one of the preceding claims, **characterized in, that** the meat is shell-cooked.

8. Method according to one of the preceding claims, **characterized in, that** the meat is cooled at the end of the process.

## Patentansprüche

1. Verfahren zum Auftauen von gefrorenen Rohfleischprodukten in einem Tumbler, der eine Trommel umfasst, wobei das Gefrierfleisch in die Trommel platziert wird, **dadurch gekennzeichnet, dass** ein Unterdruck in der Trommel hergestellt wird, wobei der Unterdruck von unter 300 mbar in der Trommel aufrechterhalten wird, während Dampf eingedüst wird, und dass das Fleisch über die Fläche der Trommel und/oder die Fläche von Trägern erwärmt und gekühlt wird.

2. Verfahren nach Anspruch 1, **dadurch gekennzeichnet, dass** der Eintrag von Dampf zumindest reduziert wird, wenn der Unterdruck unter eine vorbestimmte Höhe fällt.

3. Verfahren nach Anspruch 2, **dadurch gekennzeichnet, dass** der Unterdruck unter 200 mbar und vorzugsweise unter 100 mbar gehalten wird.

4. Verfahren nach einem der vorhergehenden Ansprüche, **dadurch gekennzeichnet, dass** die Trommel vorzugsweise mit verschiedenen Drehzahlen kontinuierlich oder intermittierend gedreht wird.

5. Verfahren nach einem der vorhergehenden Ansprüche, **dadurch gekennzeichnet, dass** die Trommel Mittel zum Erwärmen und/oder Kühlen der Oberfläche der Trommel umfasst.

6. Verfahren nach einem der vorhergehenden Ansprüche, **dadurch gekennzeichnet, dass** die Trommel während des Auftauvorgangs zumindest vorübergehend gekippt wird.

7. Verfahren nach einem der vorhergehenden Ansprüche, **dadurch gekennzeichnet, dass** die äußere Schicht des Fleisches erhitzt wird.

8. Verfahren nach einem der vorhergehenden Ansprüche, **dadurch gekennzeichnet, dass** das Fleisch am Ende des Vorgangs gekühlt wird.

## Revendications

1. Procédé de décongélation de produits à base de viande congelée crue dans un culbuteur, comprenant un tambour, la viande congelée étant ajoutée au tambour, **caractérisé en ce que** le vide est maintenu dans le tambour en dessous de 300 mbar pendant que de la vapeur est injectée et **en ce que** la viande est chauffée et refroidie par le biais de la surface du tambour et/ou de la surface de supports.

2. Procédé selon la revendication 1, **caractérisé en ce que** l'addition de vapeur est au moins réduite au cas où le vide chute en dessous d'un niveau prédéterminé.

3. Procédé selon la revendication 2, **caractérisé en ce que** le vide est maintenu en dessous de 200 mbar et plus préférablement en-dessous de 100 mbar.

4. Procédé selon l'une quelconque des revendications précédentes, **caractérisé en ce que** le tambour est tourné en continu ou de manière intermittente, de préférence avec des vitesses de tpm différentes.

5. Procédé selon l'une quelconque des revendications précédentes, **caractérisé en ce que** le tambour comprend des moyens pour chauffer et/ou refroidir la surface du tambour.

6. Procédé selon l'une quelconque des revendications précédentes, **caractérisé en ce que** le tambour est au moins temporairement incliné au cours du processus de décongélation.

7. Procédé selon l'une quelconque des revendications précédentes, **caractérisé en ce que** la viande est cuite en coquille.

8. Procédé selon l'une quelconque des revendications précédentes, **caractérisé en ce que** la viande est refroidie à la fin du processus.
